Europäisches Patentamt

European Patent Office

Office européen des brevets

(19)

(11) Veröffentlichungsnummer: **0 155 382**
**B1**

(12) # EUROPÄISCHE PATENTSCHRIFT

(45) Veröffentlichungstag der Patentschrift:
**15.07.87**

(51) Int. Cl.⁴: **H 01 B 1/12,** C 08 L 79/04

(21) Anmeldenummer: **84115281.2**

(22) Anmeldetag: **12.12.84**

(54) Verfahren zur Verbesserung der Langzeitstabilität der elektrischen Leitfähigkeit von Pyrrol-Polymerisaten.

(30) Priorität: **24.12.83 DE 3346934**

(43) Veröffentlichungstag der Anmeldung:
**25.09.85 Patentblatt 85/39**

(45) Bekanntmachung des Hinweises auf die Patenterteilung:
**15.07.87 Patentblatt 87/29**

(84) Benannte Vertragsstaaten:
**BE DE FR GB NL**

(56) Entgegenhaltungen:
**EP - A - 0 031 967**

(73) Patentinhaber: **BASF Aktiengesellschaft,
Carl-Bosch-Strasse 38, D-6700 Ludwigshafen (DE)**

(72) Erfinder: **Muenstedt, Helmut, Dr. Phys., An dem
Altenbach 41, D-6706 Wachenheim (DE)**
Erfinder: **Naarmann, Herbert, Dr. Chem., Haardtblick 15,
D-6719 Wattenheim (DE)**

## Beschreibung

Die Erfindung betrifft ein Verfahren zur Verbesserung der elektrischen Leitfähigkeit von Pyrrol-Polymerisaten, die Komplexierungsmittel enthalten.

Elektrische leitfähige Pyrrol-Polymerisate sind bekannt. So z.B. aus der US-PS 3,574,072 und den Arbeiten von A.F. Diaz et al., J.C.S. Chem. Comm. 1979, Seite 635 ff, J.C.S. Chem. Comm. 1979, Seite 854 ff. Diese elektrisch leitfähigen Pyrrol-Polymerisate werden durch anodische Polymerisation von Pyrrol in Gegenwart von Leitsalzen gebildet. Die Anionen der Leitsalze wirken als Komplexierungsmittel mit der Eigenschaft, dass das System aus Polypyrrol und Komplexierungsmittel leitfähig ist. Es ist in einer Reihe von älteren Vorschlägen und Veröffentlichungen die Verwendung elektrisch leitfähiger Pyrrol-Polymerisate in der Elektrotechnik z.B. als Schalter oder andere elektrische Bauteile beschrieben.

Es hat sich gezeigt, dass die bislang bekanntgewordenen elektrisch leitfähigen Pyrrol-Polymerisate eine gewisse Empfindlichkeit gegenüber der Einwirkung des Sauerstoffs der Luft haben, so dass bei längerer Lagerung an Luft die Leitfähigkeit verringert wird. Auch bei der Verwendeung solcher komplexierten Pyrrol-Polymerisate als Ableiter in Batterien kann über einen längeren Zeitraum hinweg die Leitfähigkeit nachlassen.

Aufgabe der Erfindung ist es, ein Verfahren aufzuzeigen, das die Langzeitstabilität der elektrischen Leitfähigkeit von Pyrrol-Polymerisaten verbessert.

Diese Aufgabe wird erfindungsgemäss gelöst durch ein Verfahren, bei dem man die Pyrrol-Polymerisate mit wässrigen Laugen von Alkalimetallen behandelt.

Eine weitere Ausführungsform der Erfindung ist die Verwendung der so behandelten Pyrrol-Polymerisate als Leiterelement in der Elektrotechnik oder als Widerstandsfolien.

Die erfindungsgemäss zu verwendenden elektrisch leitfähigen Verbindungen aus der Klasse der Pyrrol-Polymerisate zeichnen sich durch eine hohe elektrische Leitfähigkeit aus, die im allgemeinen um $10^2$ S/cm liegt.

Die Pyrrol-Polymerisate werden durch Polymerisieren von Verbindungen aus der Klasse der Pyrrole erhalten. Verbindungen aus dieser Klasse sind einmal Pyrrol selbst als auch die substituierten Pyrrole, die N-Alkylpyrrole, N-Arylpyrrole, die an den C-Atomen monoalkyl- oder dialkylsubstituierten Pyrrole und die an den C-Atomen monohalogen oder dihalogen substituierten Pyrrole. Zum Herstellung der erfindungsgemäss zu verwendenden Polymerisate kann Pyrrol allein oder in Mischung mit anderen Verbindungen aus der Klasse der Pyrrole verwendet werden. Vorzugsweise verwendet man Polymerisate des unsubstituierten Pyrrols. Werden Polymerisate substituierter Pyrrole eingesetzt, so sind Polymerisate des 3,4- Dialkylpyrrols, insbesondere mit 1 bis 4 C-Atomen im Alkyl, sowie auch der 3,4-Dihalogenpyrrols, insbesondere des 3,4-Dichlorpyrrols bevorzugt.

Die Polymerisate können auch gegebenenfalls bestimmte Mengen anderer Verbindungen, die mit Pyrrolen copolymerisieren, einpolymerisiert enthalten. Als Verbindungen, die mit Pyrrolen copolymerisieren, eignen sich z.B. Cyclopentadien-Azulen und dessen Derivate, wie Benzazulen, Kajaazulen, ferner Fulven, Inden oder auch Quadratsäure. Es kommen auch heterocyclische Verbindungen in Frage, wie Imidazol, Thiazol, Furan oder Thiophen. Auch 2-Bromthiophen, 2,6-Dimethylpyrridin und Pyrazin können verwendet werden. Auch kommen Aminoaromaten wie Anilin, Phenazetin, Aminopyrrolin oder 2-Aminoanthrazen in Frage. Bezogen auf 10 Teile Pyrrol können die Polymerisate 1 bis 10 Teile der mit Pyrrol copolymerisierenden Verbindungen einpolymerisiert enthalten.

Die Polymerisate werden bevorzugt durch elektrochemische Polymerisation der Pyrrole erhalten, wobei die Polymerisation der Monomeren durch anodische Oxidation erfolgt. Es werden hierzu beispielsweise Stromdichten von 2 bis 20 mA/cm² verwendet. Es werden meistens Spannungen im Bereich von 10 bis 50 Volt angelegt. Die Polymerisation erfolgt zweckmässig in Gegenwart von Hilfsflüssigkeiten, worin die Pyrrole löslich sind. Es können hierzu polare organische Lösungsmittel verwendet werden. Verwendet man mit Wasser mischbare Lösungsmittel, so können auch geringe Mengen Wasser zugesetzt werden. Bevorzugte Lösungsmittel sind Alkohole, Ether wie Dioxan oder auch Tetrahydrofuran, Aceton oder Acetonitril, Dimethylformamid oder n-Methylpyrrolidon.

Die Polymerisation erfolgt in Gegenwart von Komplexierungsmitteln. Man versteht hierunter Salze, die als Anionen beispielsweise Verbindungen der Gruppe $BF_4^-$, $AsF_4^-$, $AsF_6^-$, $SbF_6^-$, $SbCl^-$, $PF_6^-$, $ClO_4^-$, $HSO_4^-$ und $SO_4^{2-}$ oder vorzugsweise aromatische Sulfonsäuren wie Benzolsulfonsäure oder Toluolsulfonsäure oder auch andere organische Säuren wie Benzolsäure enthalten.

Die Salze enthalten als Kationen z.B. Lithium, Natrium oder Kalium. Sehr günstig sind auch die $NO^+$- und $NO_2^+$-Kationen sowie insbesondere die Onium-Kationen, vor allem des Stickstoffs und des Phosphors, etwa des Typs $R^4N^+$ und $R^4P^+$, worin R Wasserstoff und/oder niedere Alkylreste, vorzugsweise mit 1 bis 6 C-Atomen, cycloaliphatische Reste, vorzugsweise mit 6 bis 14 C-Atomen, oder aromatische Reste, vorzugsweise mit 6 bis 14 C-Atomen, bedeutet. Unter den Ammonium- und Phosphonium-Kationen sind diejenigen besonders bevorzugt, in denen R Wasserstoff und/oder einen Alkylrest mit 1 bis 4 C-Atomen darstellt. Beispielhaft für bevorzugte Onium-Kationen seien neben dem $NH_4^+$-Ion insbesondere das Tetramethylammonium-, das Tetraethylammonium-, das Tetra-n-butylamonium-, das Triphenylphosphonium- und das Tri-n-butylphosphonium-Kation genannt. Die Verwendung von Verbindungen dieser Klasse ist bekannt und nicht Gegenstand der Erfindung. Man verwendet im allgemeinen die Verbindungen in solcher Menge, dass die Pyrrol-Polymerisate zwischen 10 und 40 Mol-% Komplexierungsmittel, bezogen auf 1 Mol Pyrrol enthalten.

Zur Herstellung der Pyrrol-Polymerisate können jedoch auch andere der bekannten Verfahren Verwendung finden. So kann man beispielsweise Pyrrol in

wässriger Lösung mit Hilfe starker Säuren oder mit anorganischen Peroxiverbindungen wie Kaliumpersulfat polymerisieren. Nach dem letztgenannten Verfahren erhält man Polymerisate in feinpulvriger Form. Auch bei diesen Verfahren sind Salze der oben beschriebenen Art anwesend, so dass die Pyrrol-Polymerisate mit den entsprechenden Anionen komplexiert sind.

Die für das Verfahren geeigneten komplexierten Pyrrol-Polymerisate können in unterschiedlicher Form vorliegen. So bildet sich z.B. bei der anodischen Oxidation der Pyrrole ein Polymerisat aus, das mit Anionen komplexiert ist und die Form der verwendeten Anode hat. Ist die Anode flächenförmig, bildet sich eine flächige Schicht des Polymerisates aus. Verwendet man Verfahren zur Herstellung feinpulvriger Pyrrol-Polymerisate, so können diese feinen Pulver nach bekannten Verfahren unter Druck und Hitze zu Formkörpern verpresst werden. Man verwerdet meistens Temperaturen zwischen 150 und 300°C und Drücke im Bereich von 50 bis 150 bar. Nach diesem bekannten Verfahren zur Herstellung der anionisch komplexierten Pyrrol-Polymerisate ist es also möglich, Formkörper beliebiger Formgebung zu erhalten. So können z.B. Folien, Platten oder räumlich geformte Gebilde Verwendung finden.

Die Pyrrol-Polymerisate, die ein Komplexierungsmittel enthalten, werden erfindungsgemäss mit wässrigen Laugen von Alkalimetallen behandelt. So kommen z.B. die wässrigen Laugen von Natrium, Kalium oder Lithium in Frage. Es ist darauf zu achten, dass die wässrigen Laugen zweckmässig einen pH-Wert haben, der grösser als 10, insbesondere grösser als 12 ist. Für die technische Handhabung hat es sich als vorteilhaft erwiesen, solche Laugen zu verwenden, die 0,1 bis 50%ig, vorzugsweise 0,2 bis 25%ig sind.

Je nach Konzentration der Laugen ist die Behandlungszeit unterschiedlich. So reicht es z.B. aus, Filme der komplexierten Pyrrol-Polymerisate, die eine Dicke zwischen 10 und 100 μm haben, für die Dauer von bis zu 4 Stunden mit den wässrigen Laugen zu behandeln, wenn die Konzentration 0,2%ig ist. Beim Behandeln mit Laugen zeigt es sich zunächst, dass innerhalb einer kurzen Behandlungsdauer die Leitfähigkeit der Probe absinkt. So kann man feststellen, dass z.B. eine Probe aus Polypyrrol, das Benzolsulfonsäure als Komplexierungsmittel enthält nach 10 minütiger Behandlungsdauer mit 10%ger Natronlauge die Leitfähigkeit von $10^2$ S/cm auf $10^{-1}$ S/cm verändert. Es wird also stets zunächst ein Abfall der Leitfähigkeit festgestellt; bei längerer Behandlungsdauer bleibt die Leitfähigkeit auf dem einmal erreichten Niveau, das meist im Bereich zwischen $10^{-4}$ und 1 S/cm liegt. Auch ist der Effekt abhängig von der Konzentration der verwendeten Lauge. Nimmt man beispielsweise Polypyrrol, das Benzolsulfonsäure als Komplexierungsmittel enthält, das eine Leitfähigkeit von 140 S/cm hat und behandelt dies mit Natronlaugen unterschiedlicher Konzentrationen, so stellt man fest, dass die Leitfähigkeit auf eine bestimmte Höhe absinkt.

Damit ergibt sich die Möglichkeit die Leitfähigkeit von Folien aus Pyrrolpolymerisaten auf bestimmte Widerstandswerte einzustellen. Durch ein solches Verfahren können Widerstandsfolien mit definierten Werten des elektrische Widerstands erhalten werden.

Verfolgt man die Leitfähigkeit von Polypyrrol über einen längeren Zeitraum, so stellt man fest, dass beim Lagern an Luft von beispielsweise 140°C die Leitfähigkeit der Proben innerhalb eines Zeitraums von 40 Stunden auf den halben Wert absinkt. Bei Proben, die mit Natronlauge unterschiedlicher Konzentrationen, z.B. zwischen 0,2 und 50% behandelt worden sind, verändert sich die Leitfähigkeit im gleichen Zeitraum kaum messbar. Es war also überraschend, dass nach der erfindungsgemässen Behandlung die Langzeitstabilität der elektrischen Leitfähigkeit bedeutend vergrössert wird. Auch hat es sich als vorteilhaft erwiesen, dass man durch die Behandlung Leitfähigkeiten gezielt auf einen bestimmten Wert reduzieren kann, der für das jeweilige Anwendungsgebiet gewünscht wird.

Mitunter hatte sich als zweckmässig erwiesen, die Proben der komplexierten Pyrrol-Polymerisate nach der Behandlung mit Laugen von Alkalimetallen mit starken Säuren, z.B. Schwefel- oder Salzsäure zu behandeln, deren Konzentration im Bereich von 0,1 bis 25% liegt. Durch diese Säurebehandlung erreicht man ein Ansteigen der Leitfähigkeit gegenüber dem Wert der Leitfähigkeit, der nach der Alkalibehandlung erzielt worden ist. Die mit Säure behandelten Proben haben ebenfalls eine Langzeitstabilität, die der von Proben entspricht, die mit Alkalimetallen behandelt worden sind. Lediglich der Wert der Leitfähigkeit liegt dann über dem Wert der Proben, die mit Alkalilaugen behandelt worden sind.

*Beispiel 1*

Eine Folie aus Polypyrrol, die 30 Mol-% Benzonsulfonsäure als Leitsatz, bezogen auf ein Mol Pyrrol enthält, und die eine Dicke von 80 μm hat, wurde für die Dauer von 240 Minuten mit Natronlauge unterschiedlicher Konzentration behandelt.

Die mit Natronlauge behandelten Proben und die unbehandelte Probe wurden für die Dauer von 50 Tagen bei einer Temperatur von 140°C an Luft gelagert. Es wurde Leitfähigkeit der Proben zu Beginn der Lagerung ermittelt und in Beziehung gesetzt zu der Leitfähigkeit nach Ende der 50tägigen Lagerung. $\sigma_0$ ist die Leitfähigkeit zu Beginn der Lagerung und $\sigma$ die Leitfähigkeit nach Abschluss der Versuche. Es wurden folgende Ergebnisse ermittelt:

$\sigma/\sigma_0$ = 0,09 Standard-PPy
$\sigma/\sigma_0$ = 0,35 PPy mit 0,2% NaOH
$\sigma/\sigma_0$ = 0,80 PPy mit   1% NaOH
$\sigma/\sigma_0$ = 0,86 PPy mit   2% NaOH
$\sigma/\sigma_0$ = 0,70 PPy mit   5% NaOH
$\sigma/\sigma_0$ = 0,90 PPy mit 20% NaOH

Wie daraus zu entnehmen, fällt die Leitfähigkeit der mit Natronlauge behandelten Proben um einen wesentlich geringeren Grad ab als die der Probe, die nicht behandelt worden ist.

*Beispiel 2*

Eine Probe von Polypyrrol, die in dem Beispiel 1 charakterisiert ist, wurde mit Natronlauge unterschiedlicher Konzentration für die Dauer von 120 Minuten behandelt. Die Probe wurden gewaschen und getrocknet. Es wurde die Leitfähigkeit gemessen und folgendes Ergebnis erhalten:

| Behandlung | (S)cm |
|---|---|
| keine | 140 |
| 0,2% NaOH | 113 |
| 1% NaOH | 68 |
| 2% NaOH | 22 |
| 5% NaOH | 2,1 |
| 20% NaOH | 1,6 |

Wie man daraus ersieht, ist der Abfall der Leitfähigkeit umso stärker, je höher die Konzentration der Lauge bei gleichbleibender Behandlungsdauer ist

## Patentansprüche

1. Verfahren zur Verbesserung der Langzeitstabilität der elektrischen Leitfähigkeit von Pyrrolpolymerisaten, dadurch gekennzeichnet, dass man die Polymerisate mit wässrigen Laugen von Alkalimetallen behandelt.

2. Verfahren nach Anspruch 1, dadurch gekennzeichnet, dass die wässrigen Laugen einen pH-Wert von grösser als 10 haben.

3. Verfahren nach Anspruch 1, dadurch gekennzeichnet, dass 0,1 bis 50%ige Laugen verwendet werden.

4. Verfahren nach Anspruch 1, dadurch gekennzeichnet, dass man die Polymerisate anschliessend mit starken Säuren behandelt.

5. Verwendung von Pyrrolpolymerisaten, die nach dem Verfahren gemäss Anspruch 1 behandelt worden sind, als Leiterelemente in der Elektrotechnik.

6. Verwendung von Pyrrolpolymerisaten, die nach dem Verfahren gemäss Anspruch 1 behandelt worden sind, als Widerstandsfolien.

## Claims

1. A process for improving the long-term stability of the electrical conductivity of a pyrrole polymer, wherein the polymer is treated with an aqueous alkali metal hydroxide solution.

2. A process as claimed in claim 1, wherein the aqueous alkali metal hydroxide solution has a pH greater than 10.

3. A process as claimed in claim 1, wherein a 0.1 to 50% strength alkali metal hydroxide solution is used.

4. A process as claimed in claim 1, wherein the polymer is subsequently treated with a strong acid.

5. The use of a pyrrole polymer which has been treated by a process as claimed in claim 1 as a conductor element in electrical engineering.

6. The use of a pyrrole polymer which has been treated by a process as claimed in claim 1 as a resistive film.

## Revendications

1. Procédé pour améliorer la longévité de la conductibilité électrique de polymères pyrroliques, caractérisé en ce que l'on traite les polymères avec des lessives aqueuses de métaux alcalins.

2. Procédé suivant la revendication 1, caractérisé en ce que le pH des lessives aqueuses est supérieur à 10.

3. Procédé suivant la revendication 1, caractérisé en ce que l'on emploie des lessives (d'une concentration) de 0,1 à 50%.

4. Procédé suivant la revendication 1, caractérisé en ce que les polymères sont ensuite traités avec des acides forts.

5. Utilisation de polymères pyrroliques, traités par le procédé selon la revendication 1, comme éléments conducteurs dans le domaine de l'électrotechnique.

6. Utilisation de polymères pyrroliques, traités par le procédé selon la revendication 1, comme pellicules pour résistances.